# EUROPEAN PATENT SPECIFICATION

(11) **EP 3 945 454 B1**
(45) Date of publication and mention of the grant of the patent: **31.12.2025**
(21) Application number: 20305888.8
(22) Date of filing: 31.07.2020
(51) Int. Cl.: G06F 18/22, G06V 10/25, G06V 10/74, G06V 10/764, G06V 20/52

(54) **VERIFICATION OF DECLARED CONTENT**
ÜBERPRÜFUNG DEKLARIERTEN INHALTS
VÉRIFICATION D'UN CONTENU DÉCLARÉ

(43) Date of publication of application: 02.02.2022
(73) Proprietor: Bull SAS, 78340 Les Clayes-sous-Bois (FR)
(72) Inventor: LOGACHEV, Yaroslav, 78150 Rocquencourt (FR); SHINDE, Vishal, Pune - 411030 (IN); LUPPES, Jeffrey, 1354 AB Almere (NL); BISTINAS, Ioannis, 1018 CE Amsterdam (NL)
(74) Representative: IPAZ

(56) References cited:
- US-A1- 2017 242 148
- US-A1- 2020 051 017

## Description

### Field of the invention

The present invention relates to a method for automated verification of a declared content of an image associated with a textual message indicating said declared content of said image. It also relates to a computer program, a data processing device implementing such a method. The invention further relates to a method and a system for automated verification of the content of a package or a container.

The field of the invention is the field of automated processing of images, in particular for object recognition in images, et even more particularly for automated verification of a declared nature of an object represented in an image.

### Background

Object detection and recognition in photo, video and X-ray images is a complex task.

This task is even more complex when objects are products stacked for storage, for example in containers. The main difficulty is a huge variety in the nature of products, their packaging and the way to pack them into the storage container. Postal authorities and other players have been trying to solve this problem for decades with no real progress made so far, and the process still relies on manual checking of the images.

For now, the current approach to recognize products in images consists in training a neural network to recognize the objects, as proposed in documents US 2020/051017 A1 and US 2017/242148 A1. Such a training of a neural network will require thousands of images specifically selected and labelled for each product. Since there are millions of products, more labelled images will be needed. Since there are multiple types of storage for each product, training of the neural network will require a tremendous number of labelled images, and lot of time.

Thus, applying traditional image processing techniques to packed, or stacked, products leads to recognizing a limited pre-defined number of products, but does not solve the problem in general.

A purpose of the present invention is to overcome at least one of these drawbacks.

Another purpose of the invention is to propose a method for automated verification of a declared content in an image, that is more effective.

A further purpose of the invention is to propose a method for automated verification of a declared content in an image, that requires less training compared to current techniques.

Yet another purpose of the present invention is to propose a method for automated verification of a declared content in an image that may be used for a variety of objects and domains.

### Summary of the invention

The invention makes it possible to achieve at least one of these aims by a method for automated verification of a declared content of an image, according to claim 1.

Thus, the present invention proposes to check the declared content of an image, not only based on a processing of said image, but also by taking into account a textual message indicating said declared content. In this way, the present invention reduces the need for a very extensive training for image recognition as it is the case in the current techniques.

Plus, by avoiding the need for an extensive training, the present invention may be used in a variety of technical domains. It is not limited to a specific use, a specific application or domain, or to a specific family of products.

Moreover, by using the textual description of the declared content, the present invention exploits a valuable and available information, that reduces errors in content verification and makes the present invention more effective compared to existing methods. This also reduces the time and the computing resources required for content verification.

In the present invention, by "image" it is meant a digital image or picture, and in particular digital data representing an image.

In the present invention, by "textual message" it is meant a word, or a combination of several words, each comprising alphanumerical characters.

In the present invention, the image may be of all kind: a colored image, a black-and-white image, an X-ray image, a fixed image, a flow of images composing a video, etc.

According to the invention, the verification step may comprise the following steps:
- selecting one or more reference textual signatures similar to the measured textual signature, by comparing said measured textual signature to reference textual signatures stored in the reference database,
- retrieving the reference visual signature paired with each of said selected reference textual signature in said reference database, and
- comparing the measured visual signature to the retrieved reference visual signature(s).

In other words, in this embodiment, the method according to the invention first selects, in the reference database, a small group of reference textual signature(s) based on the textual description that correspond to the declared content. Then, the reference visual signature paired with each member of this small group of reference textual signature(s) is compared to the measured visual signature.

According to the invention, the verification step may comprise the following steps:
- selecting one or more reference visual signatures similar to the measured visual signature, by comparing said measured visual signature to reference visual signatures stored in the reference database,
- retrieving the reference textual signature paired with each of said selected reference visual signature in said reference database, and
- comparing the measured textual signature to the retrieved reference textual signature(s).

In other words, in this embodiment, the method according to the invention first selects, in the reference database, a small group of visual reference signature(s) based on the measured visual signature of the objet in the image. Then, the reference textual signature paired with each member of this small group of reference visual signature(s) is compared to the measured textual signature.

Regardless the embodiment, if the pair of measured signatures matches with, or is similar to, a pair of reference signatures stored in the reference database, then, according to the invention, the declared content of the image corresponds to the real content of the image as detected by the present invention.

According to a non-limitative embodiment, a measured signature is similar to, or matches with, a reference signature when said measured signature belongs to one of the clusters formed by one or several reference signatures.

Conversely, a measured signature is not similar to, or does not match with, a reference signature when said measured signature doesn't belong to one of the clusters formed by one or several reference signatures.

In the contrary, that is if the pair of measured signatures does not match with a pair of reference signatures stored in the database, then the present invention cannot confirm that the declared content of the image corresponds to the real content of the image as detected by the present invention.

In this case, a visual inspection by an operator can be performed, in addition to the automated inspection performed by the method according to the invention

If, the operator confirms the match, then the reference database may be updated and the measured visual signature and the measured textual signature may be added to the reference database as new pair of reference signatures.

In accordance with an advantageous feature, the method according to the present invention may comprise, before the step of generating the measured visual signature, a step of detecting a region of interest in the image corresponding to, or representing, an object, said step of generating the measured visual signature being carried out based only on said region of interest of said image.

In other words, this step selects a smaller region/area in the image for assessing the measured visual signature. This feature is very helpful when the image comprises different objects or products. This feature is also helpful when the image comprises objects, or products, but also empty spaces.

This feature increases the efficiency of the method according to the invention, while reducing image processing time and resources, by reducing the size of the image to be processed for generating the measured visual signature.

The selection of an area of interest may be performed based on the analysis of textures in the image. For example, empty spaces have a different image texture than a product. Similarly, different products have different textures on a same image. Thus, by analysing the texture of the image it is possible to:
- eliminate empty spaces, and
- select a specific objet or product, or group of similar or identical objects or products.

The measured visual signature may be generated by a first neural network trained beforehand for image processing.

Such neural networks may be any neural network trained at first on a database of images to produce similar vectors for images representing similar textures or objects. If needed, such a neural network may then be fine-tuned on product images in a specific domain, for example for food domain, clothing domain, for books, etc.

Example of such neural networks are well known.

According to an embodiment, the measured visual signature may be, or may comprise, a multidimensional numerical vector depending on the texture or object in said image.

The first neural network may be any kind of neural network that may be used in image processing, for assessing the similarity of images, and more particularly for textural analysis of images.

For example, the second neural network may be a feed-forward neural network, a regulatory feedback neural network, a convolutional neural network, a recurrent neural network, etc.

According to a preferred but non-limitative feature, the measured textual signature may be generated by a second neural network trained beforehand on text processing.

Such a second neural network may be any neural network trained at first on a corpus of literature and news produces by the humanity on the Internet, to produce similar vectors for words with similar meaning. If needed, such a neural network may then be fine-tuned on product description in a specific domain, for example for food products, clothing products, books, etc..

Example of such neural networks are well known.

For example, the second neural network may be the neural network known as "word2vec" developed by Google ^{®}, or the neural network known as "FastText" developed by Facebook ^{®}, or a neural network derived from one of these neural networks.

According to an embodiment, the measured textual signature may be, or may comprise, a multidimensional numerical vector.

More particularly, the measured textual signature may be a 300-dimensions numerical vector.

The second neural network may be any kind of neural network that may be used in word processing, for assessing similarity of the meanings of words or phrases.

For example, the second neural network may be a feed-forward neural network, a regulatory feedback neural network, a convolutional neural network, a recurrent neural network, etc.

According to another aspect of the same invention, it is proposed a computer program comprising instructions which, when executed by a computer, cause the computer to carry out the method for automated verification of a declared content of an image according to the present invention.

The computer program may be coded by using any kind of coding language such as C, C++, Java, Python, etc.

The computer program may be stored in a data processing device or machine, in the coding language or in machine language.

The computer program may be stored in storage medium that can be read by a data processing device or machine such as memory stick, USB dongle, a hard drive, etc. The present invention also relates such a storage medium storing the computer program according to the invention.

According to another aspect of the same invention, it is proposed a data processing device for automated verification of a content of an image associated with a textual message indicating a declared content of said image, said device comprising:
- a first processing module for generating a first numerical data, called measured visual signature, relating to an object represented in said image, by analyzing at least one part of said image,
- a second processing module for generating a second numerical data, called measured textual signature, by analyzing at least one part of said textual message, and
- an comparison module;
configured to implement the steps of the method for automated verification of a declared content of an image according to the present invention.

At least one of these modules may be composed of, or may comprise, a computer program.

At least one of these modules may be composed of, or may comprise, at least one digital component, such as chip, a processor, a calculator. At least one of these modules may be composed of, or may comprise, at least one analogue component, such as an analogue electronic board. At least one of these modules may be composed of, or may comprise, a combination of at least one digital component and at least one analogue component.

At least one of these modules may be separated or detached from at least one of the other modules. At least two of these modules may be implemented together in a same module.

The data processing device may be any kind of device such as a personal computer, a tablet, a smartphone, a server, etc.

According to another aspect of the same invention, it is proposed a method for automated verification of the content of a package or a container associated with a textual message indicating a declared content of said package or container, said method comprising the following steps:
- acquiring an image of said container or package, and
- verifying the declared content of said image by the method for automated verification of a declared content of an image according to the present invention.

According to the invention, a package may be of all kind: a shipping container, a box, a case, a suit case, a bag, a bag pack, a wrapped package, a packed parcel, etc.

According to the invention, a container may be of all kind of receptacle: a shipping container, a box, a can, a pallet, etc.

According to the invention, a package or a container may be made of all king of material: cartoon, paper, wood, plastic, iron, etc.

According to an advantageous feature, the method for automated verification of the content of a package or a container according to the invention, may comprise a step for issuing an alert signal when the content of the package or the container doesn't not match with the declared content.

Such an alert signal may be a visual, or an audio, or an audiovisual signal.

According to a particular embodiment, the step of acquiring image may provide an x-ray image of the container or the package.

Such an x-ray image may be provided by any kind of x-ray imaging device, such as x-ray imaging devices used in in train stations, in ports, in post offices, and more generally a conventional x-ray image used in a facility, or at the entrance of a facility, to check the content of a package or a container.

This embodiment of the present invention is particularly adapted to the verification of the content of packages or containers in train stations, in ports, in post offices, and similar.

According to another aspect of the same invention, it is proposed a system for automated verification of the content of a package or a container associated with a textual message indicating a declared content of said package or container, said system comprising:
- an imaging device for acquiring an image of said container or packaging, and
- a data processing device configured for implementing the method for automated verification of a declared content of an image according to the present invention.

According to a particular embodiment, the imaging device may be an x-ray imaging device, such as an imaging device used in train stations, in ports, in post offices, and more generally a conventional x-ray imaging device used in a facility, or at the entrance of a facility, to check the content of a package or a container.

The data processing device may be local to the imaging device.

The data processing device may be distant from the imaging device. More particularly the imaging device may be located on a site distant from the site where the imaging device is located.

According to an advantageous device, the system according to the invention may comprise a signaling means configured for issuing a visual, or an audio, or an audiovisual, alert when the content of the package or the container doesn't not match with the declared content.

Such a signaling means may comprise a speaker, a lighting means, a screen, etc.

### Description of the figures and embodiments

Other advantages and characteristics will become apparent on examination of the detailed description of an embodiment which is in no way limitative, and the attached figures, where:
- Figure 1 is a diagrammatic representation of a non-limitative example of a method according to the invention for automated verification of a declared content in an image;
- Figure 2 is a diagrammatic representation of a non-limitative example of a method according to the invention for automated verification of the content of a package or a container; and
- Figure 3 is a schematic representation of a non-limitative example of a system according to the invention for automated verification of the content of a package or a container.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

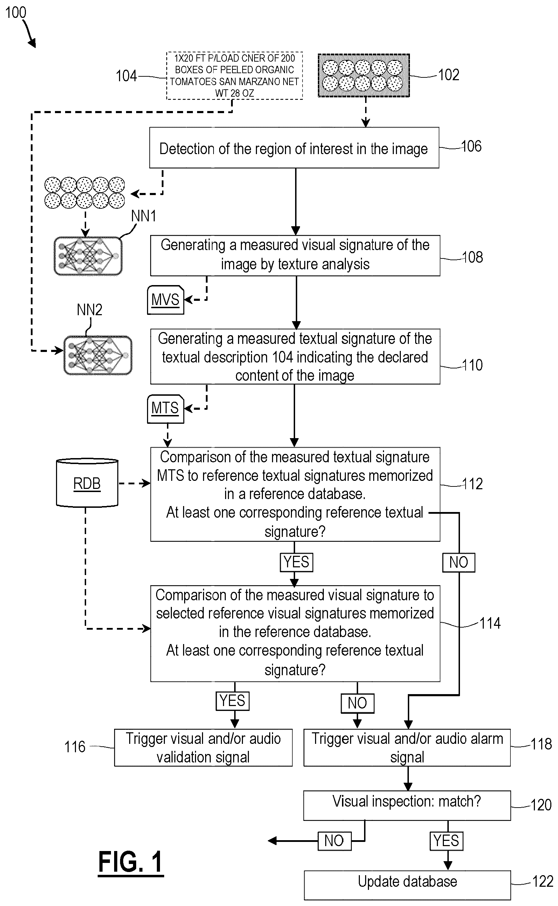

FIGURE 1 is a schematic representation of a non-limitative example of a method according to the invention for automated verification of a declared content of an image.

The method 100, shown in FIGURE 1, is used to verify the declared content of an image 102.

The image may be a colored image, a black-and-white image, an X-ray image, a fixed image, an image in a flow of images composing a video, etc.

The declared content is represented by a textual message 104 indicating that the content of the image 102 is:
« 1X20 FT P/LOAD CNER OF 200 BOXES OF
PEELED ORGANIC TOMATOES
SAN MARZANO NET WT 28 OZ »

The image 102 and the textual message 104 representing the declared content of the image are given as input data to the method 100.

The method 100 comprises a step 106 of pre-treatment of the image 102 in order to retain in said image 102 only the region(s) representing an object or a product.

Such a pre-treatment may comprise a textural analysis of the image 102 to retain only the parts of the image 102 presenting a same texture. For example, if the image 102 comprises first regions occupied by a product and second regions that are not occupied by a product, namely empty spaces, the second regions will have a texture that is different from the texture of the first regions. A texture analysis will enable eliminating the second regions corresponding to the empty spaces in the image 102 and to keep only the first regions corresponding to the object or product.

The pre-treatment step 106 may also comprise other processing(s) of the image 102 such as eliminating noise, adjusting brightness, etc.

The method 100 comprises a step 108 generating a visual signature MVS, called measured visual signature, of the image 102 by entering the pre-treated image issued by step 106 into a first neural network NN1.

For example, the measured visual signature MVS is multidimensional numerical vector depending on the texture of the pre-treated image issued by step 106.

The first neural network NN1 is trained beforehand on a database of images to produce similar vectors for images representing similar objects, optionally fine-tuned on product images in a specific domain, for example food domain in the case of the present example.

The method 100 also comprises a step 110 generating a textual signature MTS, called measured textual signature, of the textual message 104 indicating the declared content of the image 102 by entering said textual message 104 into a second neural network NN2.

For example, the measured textual signature MTS is multidimensional numerical vector depending on the semantic information of the textual message 104.

The second neural network NN2 is trained beforehand on a database of textual messages to produce similar vectors for texts having similar meanings, optionally fine-tuned on textual messages in a specific domain, for example the food domain in the case of the present example.

The second neural network NN2 may be any kind of neural network, and for example the neural network "word2vec" developed by Google ^{®} or the neural network "FastText" developed by Facebook ^{®}.

At step 112, the measured textual signature MTS is compared to reference textual signatures stored in a reference database RDB.

The reference database RDB comprises several pairs of signatures, each comprising a reference visual signature and a reference textual signature. These signatures have been determined beforehand and memorized in the reference database RDB.

According to the invention, the reference database may comprise pairs of reference signatures that are specific to a particular domain, for example the food domain for the present example. Alternatively, the reference database may be common to different domains and can comprise pairs of reference signatures relating to different domains.

The comparison of the measured textual signature MTS to each reference textual signature may be done by any known technique. For example, the comparison may determine a correlation score between the measured textual signature MTS and each reference textual signature memorized in the reference database RDB.

If, at step 112, the reference database RDB comprises at least one reference textual signature matching with the measured textual signature MTS, the method proceeds to a step 114.

For each reference textual signature matching with the measured textual signature MTS, step 114:
- retrieves, in the reference database RDB, the reference visual signature memorized with said reference textual signature, and
- compares said reference visual signature to the measured visual signature MVS.

The comparison of the measured visual signature MVS to each retrieved reference signature may be done by any known technique. For example, the comparison may determine a correlation score between the measured visual signature MVS and each reference visual signature memorized in the reference database RDB.

If, at step 114, at least one of the retrieved reference visual signatures matches with the measured visual signature MVS, the method 100 confirms that the declared content of the image matches with the content shown in the image.

The method 100 may comprise an optional step 116 for issuing a visual or audible validation signal.

After this, the method 100 is ready for processing a new image associated to a textual message indicating the declared content of the image.

If:
- at step 112: the measured textual signature MTS matches with no one of the reference textual signatures memorized in the reference database; or
- at step 114: the measured visual signature MVS matches with no one of the retrieved reference visual signatures;
then the method 100 is stopped. The method 100 cannot confirm that the declared content of the image matches with the content shown in the image.

As an alternative, the method 100 may proceed with a step 118 triggering a visual and/or audible alarm signal.

In addition, or as an alternative, a visual inspection of the image 102 may be performed by an operator, in a, optional step 120.

If, at step 120, the visual inspection of the image 102 confirms that the declared content of the image corresponds to what is shown in the image, then the measured visual signature MVS and the measured textual signature MTS may be memorized in the reference database RDB as a new pair of reference signatures, in an optional step 122.

In the contrary, the method 100 may comprise another step for triggering a second visual and/or an audio alarm signal. This second alarm signal may be the same, or different from, the alarm signal triggered in step 118.

According to an alternative embodiment, not shown in the FIGURES, steps 112 and 114 may be reversed so that:
- first, the measured visual signature MVS is compared to reference visual signatures stored in the reference database; and
- the measured textual signature MTS is compared to the reference textual signatures associated to each matching reference visual signatures, if any.

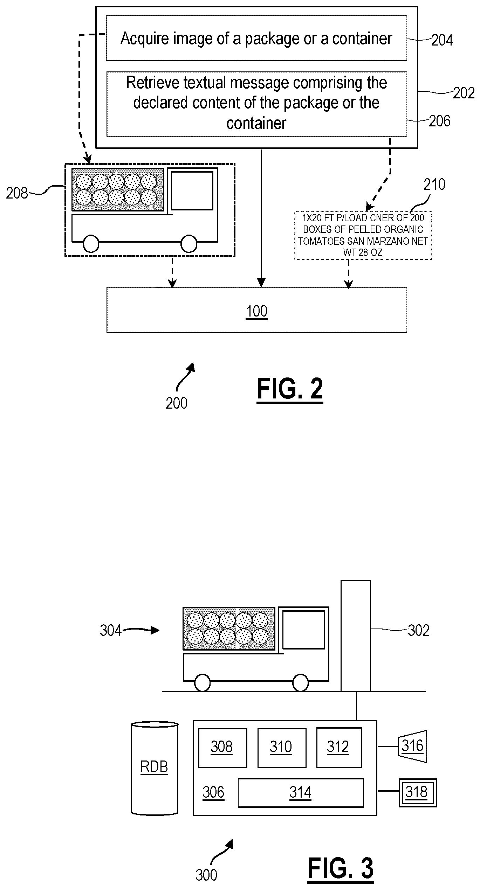

FIGURE 2 is a schematic representation of a non-limitative example of a method according to the invention for automated verification of a declared content of a package or a container.

Such a package may be of all kind: a box, a case, a suit case, a bag, a bag pack, a wrapped package, a packed parcel, etc.

Such a container may be of all kind of receptacle: a box, a can, a pallet.

Such a package or a container may be made of all kind of material: cartoon, paper, wood, plastic, iron, etc.

The method 200 shown in FIGURE 2 comprises an initiation phase 202.

The initiation phase 202 comprises a step 204 for acquiring the image of the package, or the container, comprising one or several products or objects. The image acquired in step 202 may be of all kind: a colored image, a black-and-white image, an X-ray image, a fixed image, a flow of images composing a video.

The initiation phase 202 comprises a step 206 retrieving a textual message indicating the content of the container, i.e. the products that are in the container transported by the truck.

The initiation phase 202 provides an image 208 and a textual message 210.

After the initiation phase, the method 200 comprises a method according to the invention for automated verification of a declared content of an image, such as the method 100 of FIGURE 1 for example, receiving the image 208 and the textual message 210 as input data.

FIGURE 3 is a schematic representation of a non-limitative example of a system according to the invention for automated verification of a declared content of a package or a container.

The system 300 of FIGURE 3 may be used to implement a method according to the invention for automated verification of a declared content of a package or a container, and such as the method 200 of FIGURE 2.

The system 300 comprises an imaging device 302 for acquiring an image of a container or a package. In the example shown on FIGURE 3, the imaging device 302 is a conventional X-Ray device acquiring an X-Ray image of a truck 304 transporting a container comprising products, such as cans of tomato sauce for example.

The system 300 also comprises a data processing device 306, for example a personal computer, in wired or wireless connection with the imaging device 302. The data processing device 306 is configured for implementing a method according to the invention for automated verification of a declared content of an image, such as the method 100 of FIGURE 1

For example, the data processing device 306 may comprise:
- a processing module 308 configured to pre-treatment of an image, as described above, and in particular for selecting a region of interest in the image;
- a visual signature generation module 310 for generating a measured visual signature from an image;
- a textual signature generation module 312 for generating a measured textual signature from a textual message; and
- a comparison module 314 for comparing a measured visual signature and a measured textual signature to reference signatures stored in the reference database RDB.

Each of these modules may be a programmable processor or a chip.

Although represented individually on FIGURE 3, several, or all, of these modules 308-314 may be implemented in a single processor or chip.

The system 300 also comprises visual and audible signaling means, such as a speaker 316 and a screen 318, to issue alarm or validation signals as described above.

The data processing device may be local or distant to the imaging device.

The reference database RDB may be local or distant the data processing device. In an embodiment, the reference database RDB may be stored in the data processing device.

Of course, the invention is not limited to the examples detailed above.

## Claims

1. A method (100) for automated verification of a declared content of an image (102), comprising the following steps:
- generating (108) a first numerical data (MVS), called measured visual signature, relating to the content of said image (102), by analyzing at least one part of said image (102),
- generating a second numerical data (MTS), called measured textual signature, by analyzing at least one part of a textual message (104) indicating said declared content of said image (102),
- verification (112,114) of a correspondence between said declared content and the content of said image (102) based on:
▪ said measured visual signature (MVS),
▪ said measured textual signature (MTS), and
▪ least one pair of signatures, each comprising a reference visual signature and a reference textual signature, stored in a database (RDB), called reference database;
wherein the verification step comprises the following steps:
- selecting (112) one or more reference textual signatures, respectively reference visual signatures, similar to the measured textual signature (MTS), respectively the measured visual signature, by comparing said measured textual signature (MTS), respectively said measured visual signatures, to reference textual signatures, respectively to reference visual signatures, stored in the reference database (RDB),
- for each of said selected reference textual signature, respectively each of said selected reference visual signature, retrieving the reference visual signature, respectively the reference textual signature, paired with said selected reference textual signature, respectively said selected reference visual signature, in said reference database (RDB), and
- comparing (114) the measured visual signature (MVS), respectively the measured textual signature, to the retrieved reference visual signature(s), respectively to the retrieved reference textual signatures;
**characterized in that** the method (100) comprises a textural analysis of the image (102) to retain only the parts of the image (102) presenting a same texture.

2. The method (100) according to the preceding claim, **characterized in that** it comprises, before the step (108) of generating the measured visual signature, a step (106) of detecting a region of interest in the image (102), corresponding to, or representing, an object, said step (108) of generating the measured visual signature being carried out by analyzing said region of interest in said image.

3. The method (100) according to any one of the preceding claims, **characterized in that** the measured visual signature (MVS) is generated by a first neural network (NN1) trained beforehand for image processing.

4. The method according to any one of the preceding claims, **characterized in that** the measured visual signature (MVS) is, or comprises, a numerical vector depending on the texture or on an object in said image (102).

5. The method (100) according to any one of the preceding claims, **characterized in that** the measured textual signature (MTS) is generated by a second neural network trained beforehand for text processing.

6. The method (100) according to any one of the preceding claims, **characterized in that** the measured textual signature (MTS) is, or comprises, a numerical vector.

7. A computer program comprising instructions which, when executed by a computer, cause the computer to carry out the method (100) according to any one of the preceding claims.

8. A data processing device (306) for automated verification of a content of an image (102) associated with a textual message (104) indicating a declared content of said image (102), said device (306) comprising:
- a first processing module (310) for generating a first numerical data (MVS), called measured visual signature, relating to an object represented in said image (102), by analyzing at least one part of said image (102),
- a second processing module (312) for generating a second numerical data (MTS), called measured textual signature, by analyzing at least one part of said textual message (104), and
- a comparison module (314);
configured to implement the steps of the method (100) according to any one of the claims 1 to 6.

9. A method (200) for automated verification of the content of a package or a container associated with a textual message (210) indicating a declared content of said package or container, said method comprising the following steps:
- acquiring (204) an image (208) of said container or package, and
- verifying the declared content of said image (208) by the method (100) according to any one of the claims 1 to 6.

10. The method (200) according to the preceding claim, **characterized in that** said image is an x-ray image (208).

11. A system (300) for automated verification of the content of a package or a container associated with a textual message (210) indicating a declared content of said package or said container, said system (300) comprising:
- an imaging device (302) for acquiring an image of said container or said package, and
- a data processing device (306) configured for implementing the method (100) according to any one of the claims 1 to 6.

## Patentansprüche

1. Verfahren (100) zur automatisierten Überprüfung eines deklarierten Inhalts eines Bildes (102), das die folgenden Schritte umfasst:
- Erzeugen (108) erster numerischer Daten (MVS), die als gemessene visuelle Signatur bezeichnet werden, die den Inhalt des Bildes (102) betreffen, durch Analysieren mindestens eines Teils des Bildes (102),
- Erzeugen zweiter numerischer Daten (MTS), die als gemessene textuelle Signatur bezeichnet werden, durch Analysieren mindestens eines Teils einer Textnachricht (104), die den deklarierten Inhalt des Bildes (102) angibt,
- Überprüfung (112, 114) einer Übereinstimmung zwischen dem deklarierten Inhalt und dem Inhalt des Bildes (102) basierend auf:
▪ der gemessenen visuellen Signatur (MVS),
▪ der gemessenen textuellen Signatur (MTS) und
▪ mindestens ein Paar von Signaturen, die jeweils eine visuelle Referenzsignatur und eine textuelle Referenzsignatur umfassen, die in einer Datenbank (RDB) gespeichert sind, die als Referenzdatenbank bezeichnet wird;
wobei der Überprüfungsschritt die folgenden Schritte umfasst:
- Auswählen (112) einer oder mehrerer textueller Referenzsignaturen bzw. visueller Referenzsignaturen, die der gemessenen textuellen Signatur (MTS) bzw. der gemessenen visuellen Signatur ähnlich sind, durch Vergleichen der gemessenen textuellen Signatur (MTS) bzw. der gemessenen visuellen Signatur mit textuellen Referenzsignaturen bzw. visuellen Referenzsignaturen, die in der Referenzdatenbank (RDB) gespeichert sind,
- für jede der ausgewählten textuellen Referenzsignatur bzw. jede der ausgewählten visuellen Referenzsignatur, Abrufen der visuellen Referenzsignatur bzw. der textuellen Referenzsignatur gepaart mit der ausgewählten textuellen Referenzsignatur bzw. der ausgewählten visuellen Referenzsignatur in der Referenzdatenbank (RDB) und
- Vergleichen (114) der gemessenen visuellen Signatur (MVS) bzw. der gemessenen textuellen Signatur mit der/den abgerufenen visuellen Referenzsignatur(en) bzw. den abgerufenen textuellen Referenzsignaturen;
**dadurch gekennzeichnet, dass** das Verfahren (100) eine strukturelle Analyse des Bildes (102) umfasst, um nur die Teile des Bildes (102) beizubehalten, die die gleiche Struktur aufweisen.

2. Verfahren (100) nach dem vorstehenden Anspruch, **dadurch gekennzeichnet, dass** es vor dem Schritt (108) des Erzeugens der gemessenen visuellen Signatur einen Schritt (106) des Erkennens einer Region von Interesse in dem Bild (102) umfasst, die einem Objekt entspricht oder dieses darstellt, wobei der Schritt (108) des Erzeugens der gemessenen visuellen Signatur durch Analysieren dieser Region von Interesse in dem Bild durchgeführt wird.

3. Verfahren (100) nach einem der vorstehenden Ansprüche, **dadurch gekennzeichnet, dass** die gemessene visuelle Signatur (MVS) durch ein erstes neuronales Netz (NN1) erzeugt wird, das zuvor zur Bildverarbeitung trainiert wurde.

4. Verfahren nach einem der vorstehenden Ansprüche, **dadurch gekennzeichnet, dass** die gemessene visuelle Signatur (MVS) ein numerischer Vektor ist oder diesen umfasst, der von der Struktur oder einem Objekt in dem Bild (102) abhängt.

5. Verfahren (100) nach einem der vorstehenden Ansprüche, **dadurch gekennzeichnet, dass** die gemessene textuelle Signatur (MTS) durch ein zweites neuronales Netz erzeugt wird, das zuvor zur Textverarbeitung trainiert wurde.

6. Verfahren (100) nach einem der vorstehenden Ansprüche, **dadurch gekennzeichnet, dass** die gemessene textuelle Signatur (MTS) ein numerischer Vektor ist oder diesen umfasst.

7. Computerprogramm, das Anweisungen umfasst, die, wenn sie durch einen Computer ausgeführt werden, den Computer veranlassen, das Verfahren (100) nach einem der vorstehenden Ansprüche auszuführen.

8. Datenverarbeitungsvorrichtung (306) zur automatisierten Überprüfung eines Inhalts eines Bildes (102), das einer Textnachricht (104) zugeordnet ist, die einen deklarierten Inhalt des Bildes (102) angibt, wobei die Vorrichtung (306) umfasst:
- ein erstes Verarbeitungsmodul (310) zum Erzeugen erster numerischer Daten (MVS), die als gemessene visuelle Signatur bezeichnet werden, die ein Objekt betreffen, das in dem Bild (102) dargestellt ist, durch Analysieren mindestens eines Teils des Bildes (102),
- ein zweites Verarbeitungsmodul (312) zum Erzeugen zweiter numerischer Daten (MTS), die als gemessene textuelle Signatur bezeichnet werden, durch Analysieren mindestens eines Teils der Textnachricht (104) und
- ein Vergleichsmodul (314);
das konfiguriert ist, um die Schritte des Verfahrens (100) nach einem der Ansprüche 1 bis 6 zu implementieren.

9. Verfahren (200) zur automatisierten Überprüfung des Inhalts eines Pakets oder eines Containers, das bzw. der einer Textnachricht (210) zugeordnet ist, die einen deklarierten Inhalt des Pakets oder des Containers angibt, wobei das Verfahren die folgenden Schritte umfasst:
- Aufnehmen (204) eines Bildes (208) des Containers oder des Pakets und
- Überprüfen des deklarierten Inhalts des Bildes (208) durch das Verfahren (100) nach einem der Ansprüche 1 bis 6.

10. Verfahren (200) nach dem vorstehenden Anspruch, **dadurch gekennzeichnet, dass** es sich bei dem Bild um ein Röntgenbild (208) handelt.

11. System (300) zur automatisierten Überprüfung des Inhalts eines Pakets oder eines Containers, das bzw. der einer Textnachricht (210) zugeordnet ist, die einen deklarierten Inhalt des Pakets oder des Containers angibt, wobei das System (300) umfasst:
- eine Bildgebungsvorrichtung (302) zum Aufnehmen eines Bildes des Containers oder des Pakets und
- eine Datenverarbeitungsvorrichtung (306), die zum Implementieren des Verfahrens (100) nach einem der Ansprüche 1 bis 6 konfiguriert ist.

## Revendications

1. Procédé (100) destiné à la vérification automatisée d'un contenu déclaré d'une image (102), comprenant les étapes suivantes :
- génération (108) de premières données numériques (MVS), appelées signature visuelle mesurée, se rapportant au contenu de ladite image (102), en analysant au moins une partie de ladite image (102),
- génération de secondes données numériques (MTS), appelées signature textuelle mesurée, en analysant au moins une partie d'un message textuel (104) indiquant ledit contenu déclaré de ladite image (102),
- vérification (112, 114) d'une correspondance entre ledit contenu déclaré et le contenu de ladite image (102) en fonction :
▪ de ladite signature visuelle mesurée (MVS),
▪ de ladite signature textuelle mesurée (MTS), et
▪ d'au moins une paire de signatures, comprenant chacune une signature visuelle de référence et une signature textuelle de référence, stockées dans une base de données (R.DB), appelée base de données de référence ;
dans lequel l'étape de vérification comprend les étapes suivantes :
- sélection (112) d'une ou plusieurs signatures textuelles de référence, et respectivement de signatures visuelles de référence, similaires à la signature textuelle mesurée (MTS), respectivement à la signature visuelle mesurée, en comparant ladite signature textuelle mesurée (MTS), et respectivement ladite signature visuelle mesurée, à des signatures textuelles de référence, respectivement à des signatures visuelles de référence, stockées dans la base de données de référence (R.DB),
- pour chacune parmi ladite signature textuelle de référence sélectionnée, et respectivement pour chacune parmi ladite signature visuelle de référence sélectionnée, récupération de la signature visuelle de référence, respectivement de la signature textuelle de référence, appariées à ladite signature textuelle de référence sélectionnée, respectivement à ladite signature visuelle de référence sélectionnée, dans ladite base de données de référence (R.DB), et
- comparaison (114) de la signature visuelle mesurée (MVS), et respectivement de la signature textuelle mesurée, à la ou aux signature(s) visuelle(s) de référence récupérée(s), et respectivement aux signatures textuelles de référence récupérées ;
**caractérisé en ce que** le procédé (100) comprend une analyse texturale de l'image (102) pour retenir uniquement les parties de l'image (102) présentant une même texture.

2. Procédé (100) selon la revendication précédente, **caractérisé en ce qu'**il comprend, avant l'étape (108) de génération de la signature visuelle mesurée, une étape (106) de détection d'une région d'intérêt dans l'image (102), correspondant à, ou représentant, un objet, ladite étape (108) de génération de la signature visuelle mesurée étant effectuée en analysant ladite région d'intérêt dans ladite image.

3. Procédé (100) selon l'une quelconque des revendications précédentes, **caractérisé en ce que** la signature visuelle mesurée (MVS) est générée par un premier réseau neuronal (NN1) entraîné au préalable pour un traitement d'image.

4. Procédé selon l'une quelconque des revendications précédentes, **caractérisé en ce que** la signature visuelle mesurée (MVS) est, ou comprend, un vecteur numérique dépendant de la texture ou d'un objet dans ladite image (102).

5. Procédé (100) selon l'une quelconque des revendications précédentes, **caractérisé en ce que** la signature textuelle mesurée (MTS) est générée par un second réseau neuronal entraîné au préalable pour un traitement de texte.

6. Procédé (100) selon l'une quelconque des revendications précédentes, **caractérisé en ce que** la signature textuelle mesurée (MTS) est, ou comprend, un vecteur numérique.

7. Programme d'ordinateur comprenant des instructions qui, lorsqu'elles sont exécutées par un ordinateur, amènent l'ordinateur à effectuer le procédé (100) selon l'une quelconque des revendications précédentes.

8. Dispositif de traitement de données (306) destiné à une vérification automatisée d'un contenu d'une image (102) associée à un message textuel (104) indiquant un contenu déclaré de ladite image (102), ledit dispositif (306) comprenant :
- un premier module de traitement (310) permettant de générer des premières données numériques (MVS), appelées signature visuelle mesurée, se rapportant à un objet représenté dans ladite image (102), en analysant au moins une partie de ladite image (102),
- un second module de traitement (312) permettant de générer des secondes données numériques (MTS), appelées signature textuelle mesurée, en analysant au moins une partie dudit message textuel (104), et
- un module de comparaison (314) ;
configuré pour implémenter les étapes du procédé (100) selon l'une quelconque des revendications 1 à 6.

9. Procédé (200) destiné à une vérification automatisée du contenu d'un paquet ou d'un conteneur associé à un message textuel (210) indiquant un contenu déclaré dudit paquet ou conteneur, ledit procédé comprenant les étapes suivantes :
- acquisition (204) d'une image (208) dudit conteneur ou paquet, et
- vérification du contenu déclaré de ladite image (208) par le procédé (100) selon l'une quelconque des revendications 1 à 6.

10. Procédé (200) selon la revendication précédente, **caractérisé en ce que** ladite image est une image aux rayons X (208).

11. Système (300) destiné à une vérification automatisée du contenu d'un paquet ou d'un conteneur associé à un message textuel (210) indiquant un contenu déclaré dudit paquet ou dudit conteneur, ledit système (300) comprenant :
- un dispositif d'imagerie (302) permettant d'acquérir une image dudit conteneur ou dudit paquet, et
- un dispositif de traitement de données (306) configuré pour l'implémentation du procédé (100) selon l'une quelconque des revendications 1 à 6.
